# EUROPEAN PATENT APPLICATION

(11) **EP 1 398 782 A2**
(43) Date of publication of application: **17.03.2004**
(21) Application number: 03292083.7
(22) Date of filing: 25.08.2003
(51) Int. Cl.: G11B 17/22

(54) **CD changer**

(30) Priority: 04.09.2002 DE 10241311
(71) Applicant: Thomson Licensing S.A., 92100 Boulogne-Billancourt (FR)
(72) Inventor: Aschenbrenner, Frank, 78073 Bad Dürrheim (DE); Dupper, Rolf, 78050 Villingen-Schwenningen (DE); Vogler, Gerold, 78234 Engen (DE)
(74) Representative: Thies, Stephan

(57) **Abstract**

The present invention relates to a CD changer of the "carousel type", in which three or five optical recording media, referred to below as disk, are arranged on a rotatable disk holder, the carousel. It has a drawer (2) which can be moved between a retracted and an extended position by a drawer movement mechanism (8).

The object of the invention is to propose a solution which improves the functionality of the CD changer.

It is proposed in the invention that the drawer has a stop (15, 25) which, in the extended position, bears against a pin (11, 21) of the drawer movement mechanism (8), and which, when force acts on the drawer (2), exerts on the drawer movement mechanism a force which is directed in the radial direction of said mechanism.

## Description

The present invention relates to a CD changer of the "carousel type", in which three or five optical recording media, referred to below as disk, are arranged on a rotatable disk holder, the carousel. Two, four, six or more disks may also be provided here. The disk holder is arranged on a drawer which is arranged in the manner such that it can move between a position in which it is retracted in the CD changer and an extended position. In the extended position, it is possible for the operator to insert, exchange or remove individual disks at freely accessible disk-holding sites. If it is intended to exchange, remove or insert disks at disk-holding sites which are not freely accessible, then, in response to an order, the disk holder is rotated until the corresponding disk-holding site is freely accessible. The CD changer furthermore has a disk-playing unit which, in the retracted position of the drawer, interacts with one of the disk-holding sites: the disk-playing unit either picks up a disk from the disk-holding site in order subsequently to play it, or deposits the disk into the disk-holding site, for example in order to be able to pick up a different disk from a different disk-holding site, or in order to make the deposited disk available for the user to remove. The disk-playing unit is designed here in such a manner that the drawer can be moved into its position in which it is extended out of the device while a disk is being played without disturbing the playing process. Exchange of the disks in the disk-holding sites is therefore also possible during the playing mode. The CD changer furthermore has a drawer movement mechanism which serves to move the drawer to and fro between its retracted and its extended position. For this purpose, it has a rotatably arranged lever arm which interacts with the drawer by means of a stud, referred to below as a pin which is guided in a guide groove of the drawer. In the extended position of the drawer, the lever arm encloses an angle of greater than 0° with the direction of movement of the drawer.

A disadvantage of a device of this type is that the extended drawer can also be inadvertently moved during the playing mode by the user in the direction of the retracted position where a collision between the disk being played and a newly inserted disk or the disk holder may occur if a corresponding disk-holding site provided with a disk is arranged at the precise location at which a free site for returning the disk which is being played would be required, or the disk holder is in an angular position which is not a position corresponding to the retracted position.

The object of the invention is to propose a solution which improves the functionality of the CD changer.

This is achieved according to the invention by the drawer having a stop which, in the extended position, bears against a pin of the drawer movement mechanism, the stop and pin being arranged with respect to each other in such a manner that, when force acts on the drawer in the direction of the pushed-in position thereof, a force which is directed in the radial direction of the drawer movement mechanism, in particular of the lever arm, is exerted by the stop on the pin and therefore on the lever arm. This force is therefore directed toward the axis of rotation of the lever arm, and the effective lever arm in this case is zero. Torque is therefore not produced and the drawer does not move, although a force which is suitable for pushing it in is exerted on it from the outside. This has the advantage that, when exchanging disks and simultaneously playing a disk, an inadvertent pushing-in of the drawer by the user is prevented. A collision of a disk-holding site filled by a disk with the disk in the playing unit, or a collision with the disk holder which is in a non-defined rotational position is therefore prevented. Likewise lying within the scope of the invention is the fact that a stop is provided on the drawer movement mechanism, said stop correspondingly interacting with a pin or with a similar element of the drawer.

According to one advantageous refinement of the invention, the stop has a curved surface against which the pin comes to bear, the curvature of the curved surface corresponding to a circle, the center of which corresponds to the axis of rotation of the lever arm in the extended position of the drawer. This has the advantage of ensuring that, even if the lever arm has a slight angular deviation in the extended position, the effective lever arm becomes zero and pushing-in of the drawer, which is caused by mechanical actuation by the user, is therefore prevented.

The pin is preferably arranged in the radially outer region of the lever arm. The stop is then provided at a corresponding point on the groove. This has the advantage of a relatively precise angular positioning being possible by the large distance between the pivot of the lever arm and pin, and of deviations from the ideal direction scarcely being able to occur, as a result of which an effective lever arm of zero which is as optimum as possible is reached.

According to one advantageous variant of the invention, the pin is arranged on an element which is operatively connected to the lever arm. This element is advantageously, but not exclusively, a gearwheel driving the lever arm. One advantage of this variant is that the arrangement of the stop in the device can be selected relatively freely. In this case, design or functional changes to the lever arm or guide groove or the like are not required.

The pin is advantageously provided with a surface which is matched to that surface of the stop against which it bears in the extended state. This has the advantage of achieving particularly good interaction between these two elements by means of an optimum fitting shape. Even if there is a slight deviation from the optimum positions, slipping does not occur and the drawer is optimally secured against being pushed in. For example, the curvature of the surface of the pin is matched to the curvature of the surface of the stop, or both surfaces are similarly of planar design, or both surfaces or at least one of the surfaces are/is roughened in order to obtain increased friction between the surfaces, or the pin is provided with a particularly large diameter. It is also understood here that modifications likewise lie within the scope of the invention.

The stop advantageously has a beveled edge region. This has the advantage that the pin, as it approaches the stop, i.e. before it reaches the blocking position, does not strike against said stop, but rather is guided into the correct position with respect to the stop, if appropriate via the bevel.

The invention makes provision for the guide groove to have at least one bevel which serves as a stop. In this case, the bevel may be a flattening of the entire groove, an indentation or widening of the groove, and the groove may continue straight or in a similar manner after the bevel. This has the advantage of the guide groove, which is present in any case, taking on the additional function of the stop by means of a small modification.

One advantageous development of the invention makes provision for there to be a certain amount of play between the extended position of the drawer and that position in which the pushing-in is blockaded by the stop and pin. This has the advantage of making possible a small deviating movement of the drawer which, if appropriate, is further damped. If the user acts upon the drawer with a force, said drawer is therefore not immediately blocked, but rather yields at least a little. This movement is advantageously detected and evaluated as a command for retraction of the drawer. Before the automatic retraction, it is tested whether the disk holder is in a correct angular position and whether the disk-holding site which interacts with the disk-playing unit is free from a disk. Otherwise, a corresponding state is produced or, if this is not possible, the user is given a corresponding indication.

Further features and advantageous refinements of the invention are likewise contained in the following description. It is understood that modifications and combinations which have not been expressly mentioned also lie within the scope of the invention. In the drawing:
- Fig. 1: shows a schematic illustration of a CD changer according to the invention with the drawer retracted,
- Fig. 2: shows a CD changer according to the invention with the drawer partially extended,
- Fig. 3: shows a CD changer according to the invention with the drawer completely extended,
- Fig. 4: shows a detail of a CD changer according to the invention with the drawer virtually completely extended,
- Fig. 5: shows a detail of a CD changer according to the invention with the drawer completely extended, and
- Fig. 6: shows a three-dimensional illustration of the detail from fig. 5.

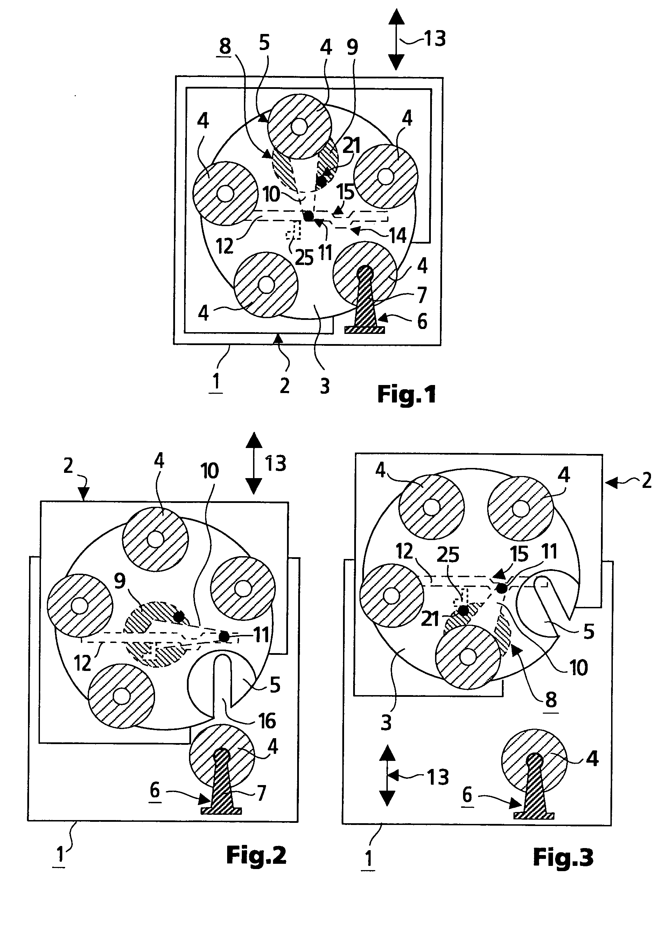

Fig. 1 shows a schematic illustration of a CD changer 1 according to the invention with the drawer 2 retracted. An essentially circular disk holder 3 is arranged rotatably on the drawer 2. Five optical recording media 4, also referred to below as disk 4, are situated in disk-holding sites 5 of the disk holder 3. In this illustration, the disk-holding sites 5 are covered by the disks 4. The disk holder 3 is rotated on command, so that each of the disks 4 can be brought into each angular position. A disk-playing unit 6 is likewise illustrated schematically. It is situated in the right, lower corner of fig. 1. A holding arm 7 holds the disk 4 which is held from the other side, not visible here, by a driving unit. Further details in this regard are known by the expert and are therefore not described in full here.

Furthermore, a drawer movement mechanism 8 is illustrated schematically. Since the latter is situated below the disk holder 3, i.e. is not visible in this view, it is illustrated by dashed lines. A lever arm 10 is arranged on a driving gearwheel 9, can be rotated by the driving gearwheel 9 and has a pin 11 at its radially outer end. The pin 11 engages in a guide groove 12 of the drawer 2. Rotation of the driving gearwheel 9 and therefore of the lever arm 10 has the effect that the pin 11 is displaced in the lateral direction in the figure, in the process exerts on the guide groove 12 a force which is directed in the direction of movement 13 of the drawer and in the process drives the drawer 2 in its direction of movement 13. The guide groove 12 has a bulge 14 on which a stop 15 is situated. The stop 15 interacts, as described further below, in the extended position of the drawer 2 with the pin 11 in order to block an unintentional, mechanical pushing of the drawer 2 into the CD changer 1. As an alternative to this, a pin 21 is illustrated which is arranged on the driving gearwheel 9 and, in the extended position of the drawer 2, interacts with a stop 25 and likewise blocks an unintentional pushing-in of the drawer 2.

Fig. 2 shows the CD changer from Fig. 1 with the drawer 2 partially extended. The corresponding driving mechanism is known to the expert and is therefore not described more specifically here. Parts which are the same as in fig. 1 are provided with the same reference numbers. It can be seen that the lever arm 10 is rotated through approximately 90° counterclockwise with respect to fig. 1. The pin 11 is situated in the outer, right-hand part of the guide groove 12. The right-hand, lower disk-holding site 5 can now be seen, since the disk 4 which is arranged there is held by the holding arm 7 and is being played by the disk-playing unit 6. The disk-holding site 5 has a recess 16 which makes it possible for the disk 4 to be held both from above and from below by the disk-playing unit 6, and at the same time a movement of the drawer 2 in the direction of movement 13 is made possible.

Fig. 3 shows the CD changer 1 according to the invention from the preceding figures with the drawer 2 completely extended. In order for a user to remove the disks 4, the disk holder 3 is rotated through approximately 36° with respect to its position shown in the preceding figures. As a result, two disks 4 are accessible without any problem to the user. In this position of the drawer 2, the pin 11 of the lever arm 10 bears against the stop 15 of the guide groove 12. If the user exerts on the drawer 2 a force in the direction of movement 13 of the drawer 2, then the stop 15 transmits a force which is directed in the radial direction, i.e. in the longitudinal direction of the lever arm 10, to the pin 11. In this case, the effective lever arm is zero, with the result that the drawer 2 is blocked in its extended position. Pushing-in of the drawer 2 and therefore a possible collision of the disk holder 3 or of one of the disks 4 with the disk 4 situated in the disk-playing unit 6 or with the disk-playing unit 6 is therefore prevented. It can be seen that the lever arm is aligned at angle of less than 90° with respect to a direction which is perpendicular to the direction of movement 13 and which corresponds essentially to the direction of the groove 12. This angle should be kept as small as possible, so that the lever arm protrudes as little as possible, if at all, from the CD changer, and at the same time the drawer movement mechanism 8 is arranged as far forward as possible in the device. The fewer movable parts protrude from the device, the smaller is the risk of contamination and collision. The further forward the movement mechanism 8 is arranged, i.e. facing away from the region in which the disk-playing unit 6 is arranged, the more clearance there is for arranging other elements, such as drawer drive, evaluating or control units or similar elements in the central and rear region of the device. Furthermore, this increases the freedom of design in the structural refinement and arrangement of the components and functions of the device.

It should be noted that the relative dimensions are not necessarily specified correctly in figures 1 to 3, i.e. even a relatively small movement of the drawer 2 in the direction 13 may result in a collision of this type. After the user has removed, exchanged or newly inserted individual disks 4, he actuates a drawer retraction switch (not illustrated here), whereupon the disk holder 3 is rotated back again through approximately 36°. Furthermore, the device automatically monitors whether the right-hand, lower disk-holding site 5 is free from a disk 4. If this is not the case, then the disk holder 3 is repeatedly rotated through 72° until a free disk-holding site 5 has arrived in the right-hand, lower position. If none of the disk-holding sites 5 is free, then an error is indicated to the user, and he is requested to remove at least one of the disks 4. Only if a free disk-holding site 5 has arrived in the right-hand, lower position is the drawer 2 retracted by motor. If a disk 4 is not being played by the disk-playing unit 6 and the user requests the extension of the drawer 2 by means of a corresponding actuating button, then the drawer movement mechanism 8 rotates the lever arm 10, starting from fig. 1, in the clockwise direction. This is not illustrated here and the extended state of the drawer 2 corresponds approximately to the state illustrated in fig. 3, with the differences that there is no disk 4 in the disk-playing unit 6 and that the lever 10 is aligned to the left at an approximately corresponding angle. In this position, a stop 15 is not provided in the exemplary embodiment illustrated here, since a collision with the disk-playing unit 6 cannot occur even if the user mechanically actuates the drawer 2. In this case, the user is permitted to push in the drawer 2.

In Fig. 3 it can furthermore be seen that the pin 21, which is illustrated as an alternative, also bears against the stop 25, which is illustrated as an alternative. It can be seen that here, too, the direction of the action of force corresponds to the radial direction of the drawer movement mechanism 8 and pushing-in of the drawer 2 by the user is therefore prevented.

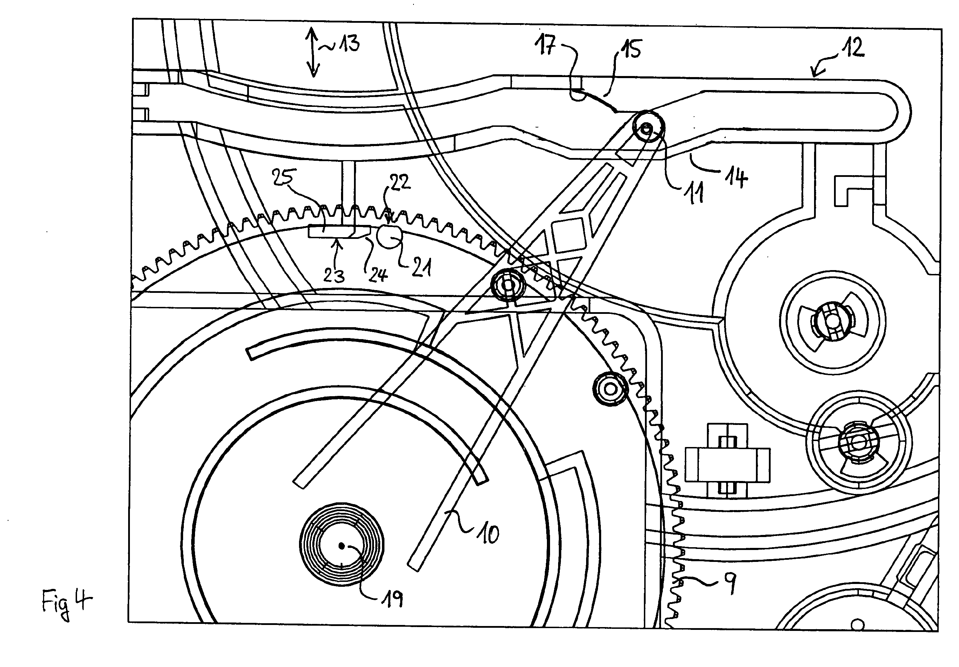

Fig. 4 shows a detail of a CD changer according to the invention with the drawer almost extended. The individual elements are illustrated partially transparently in order to make it easier to see their respective interaction. The driving gearwheel 9, its axis of rotation 19 and the lever arm 10 which is arranged on the driving gearwheel 9 can be seen. The pin 11 of the lever arm 10 is situated in the region of the bulge 14 of the guide groove 12. A further rotation of the driving gearwheel 9 in the counterclockwise direction causes the pin 11 to exert on the guide groove 12 a force which is directed in the direction of movement 13 of the drawer 12 and, in the process, to migrate in the bulge 14 further to the left into the region of the stop 15. It can be seen that the stop 15 has a curved surface 17. The radius of curvature of the surface 17 corresponds to the distance and the position of the surface 17 with respect to the axis of rotation 19 in the extended position of the drawer 2. A stop (not illustrated here) which is arranged, for example, on the drawer 2 or on the drawer movement mechanism 8 prevents the driving gearwheel 9 from moving further than as far as the completely extended position of the drawer 2 and it therefore comes to a stop in the region of the stop 15. In this illustration, the pin 21, which is illustrated as an alternative, is still at a small distance from the stop 25. It can be seen that the stop 25 has a beveled edge region 24 along which the pin 21 slides when it is moved an appropriate distance further on in the counterclockwise direction. Since the stop 25 at the same time moves away from the axis of rotation 19 in the direction 13, a blockade by the pin 21 and stop 25 does not occur. It can furthermore be seen that the pin 21 has a flattened surface 22 which interacts with a correspondingly flattened surface 23 of the stop 25 in the completely extended position of the drawer 2. A slipping of the pin 21 relative to the stop 25 is therefore prevented and the transmitted force is always directed toward the axis of rotation 19, thus preventing rotation of the driving gearwheel 9 and therefore pushing-in of the drawer 2.

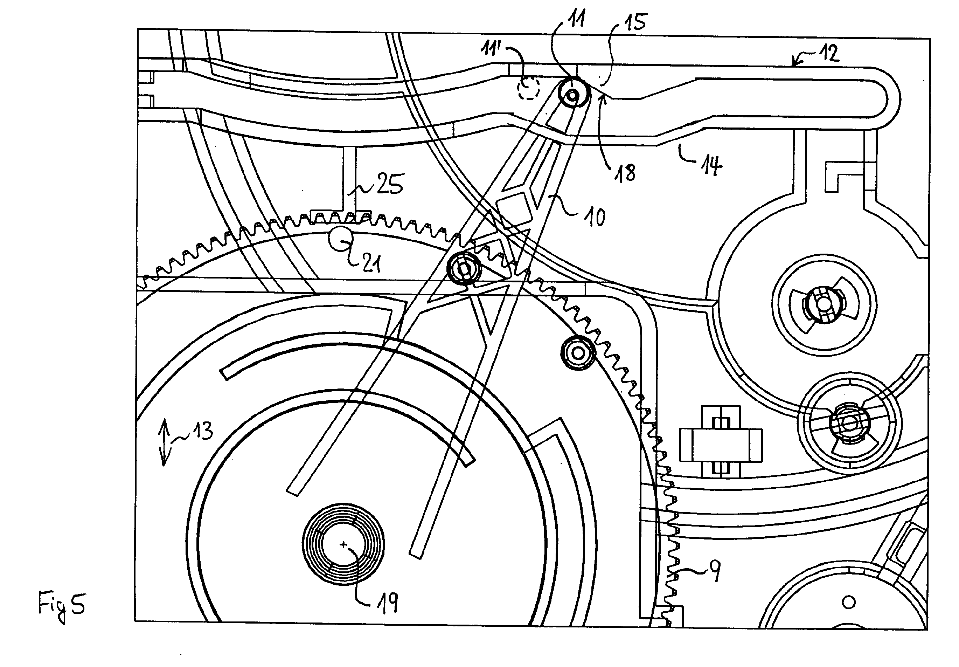

Fig. 5 shows the detail from fig. 4 with the drawer 2 completely extended. The stop 15 is illustrated here as a bevel 18 which does not have any curvature at all. The pin 21 is also illustrated as an alternative without a flattened surface. If the user gives a corresponding command for insertion of the drawer 2, for example by pushing a button, then the driving gearwheel 9 moves in the clockwise direction. In the process, the pin 11 slides along the stop 15, then reaches the lower edge boundary of the guide groove 12 and, on further movement in the clockwise direction, pulls the drawer 2 in the direction of movement 13 into the device. In this case, a blockade by the pin 11 and stop 15 does not take place, since the movement originates from the lever arm 9. Similarly, a blockade of the pin 21 and stop 25, which are illustrated as alternatives, does not take place, since the pin 21 has already moved a few degrees in the clockwise direction before the stop 25 is moved in the direction of movement 13 toward the axis of rotation 19. The pin 21 and stop 25 therefore do not come into contact with each other during the automatic retracion of the drawer 2.

According to an alternative embodiment of the invention, the position illustrated in fig. 5 corresponds, as previously described, to the blockade position in which pushing-in of the drawer 2 in the direction of movement 13 is blocked, but in this variant it does not represent the end position of the rotation of the lever arm 10. According to the alternative variant, said lever arm continues to move as far as the alternative position 11', in which case the drawer 2 is displaced slightly further outward. A mechanical actuation of the drawer 2 by the user in the pushing-in direction causes the lever arm to be moved slightly in the clockwise direction until it, starting from the alternative position 11', has reached the position of the pin 11 that is illustrated in fig. 5. This simultaneously achieves the blockade position caused by the pin 11 and stop 15. The drawer 2 cannot be pushed in further from here. The slight movement of the drawer 2 in the direction of movement 13 is detected by a sensor 15 (not illustrated here) and interpreted as an order by the user to automatically retract the drawer 2. The device carries out the check described further above to the effect that the disk holder 3 has taken up the correct angular position and the corresponding disk-holding site 5 is free, and then carries out the automatic retraction of the drawer 2 without waiting for the user to give a further order by pressing a corresponding button.

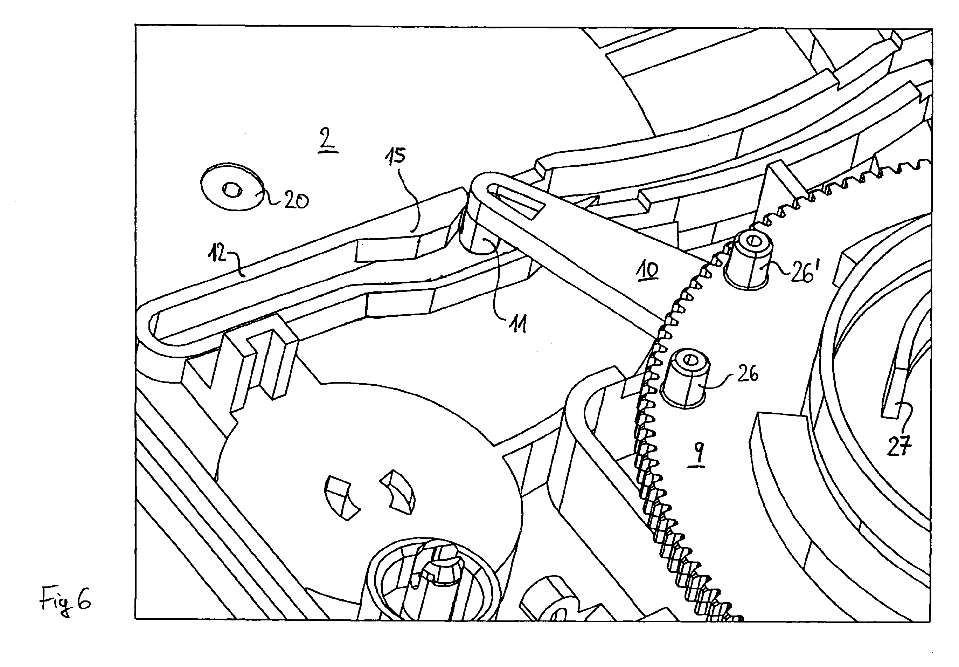

Fig. 6 shows a three-dimensional illustration of the detail from fig. 5. An illustration from below is selected here. The driving gearwheel 9, the lever arm 10 which is fastened to it and the pin 11 of which engages in the guide groove 12 can be seen. The guide groove 12 is arranged on the drawer 2, which has a mounting 20 about which the disk holder 3 (not visible here) is arranged rotatably. In the illustrated figure, the stop 15 is not formed quite as far as the bottom of the guide groove 12. Journals 26, 26', which are arranged on the driving gearwheel 9, are used to restrict the rotational movement of the driving gearwheel 9 in the one or other direction of rotation. For this purpose, they strike against stops (not illustrated here). In the case in which the position illustrated corresponds to the completely extended drawer 2, the journal 26' bears against the corresponding stop. In the alternative version in which a further movement of the lever arm 10, in the diagram to the right, is still possible, the journal 26' arrives at the stop only after the corresponding angular movement. The journal 26 then arrives at the stop when the drawer 2 is extended, without a disk 4 being played. This second variant, which has already been described further above, of the movement of the drawer 2 into its extended position is selected because the corresponding total movement of the driving gearwheel 9, which amounts to virtually 360°, can also be used to carry out other functions, such as, for example, the driving of the holding arm 7 or of other parts of the disk-playing unit 6 into a disk-holding position or a disk release position. Among other things, the guide rib 27 is used for this purpose.

## Claims

1. A CD changer (1) having
- a drawer (2) for holding a plurality of optical recording media (4), which is arranged in a manner such that it can move between a position in which it is retracted in the CD changer (1) and a position in which it is extended out of the CD changer (1), and which has a rotatably arranged disk holder (3) which has at least two disk-holding sites (5),
- a disk-playing unit (6) which, in the retracted position of the drawer (2), interacts with one of the disk-holding sites (5) to remove a disk (4) from the disk-holding site (5) or to deposit a disk (4) into the disk-holding site (5),
- a drawer movement mechanism (8) for moving the drawer (2) between its retracted and extended position, with a rotatably arranged lever arm (10) which interacts with the drawer by means of a pin (11) which is guided in a guide groove (12) of the drawer (2),
- it being possible for the drawer (2) to be moved between a retracted and an extended position while a disk (4) is being played by the disk-playing unit (6), and the lever arm (10) in the extended position enclosing an acute angle with the direction of movement (13) of the drawer (2), wherein the drawer has a stop (15, 25)
- which, in the extended position, bears against a pin (11, 21) of the drawer movement mechanism (8), and
- which, when force acts on the drawer (2), exerts on the drawer movement mechanism (8) a force which is directed in the radial direction of said mechanism.

2. The CD changer as claimed in claim 1, wherein the stop (15) has a curved surface (17) against which the pin (11) bears and the curvature of which corresponds to a circle, the center of which corresponds to the axis of rotation (19) of the lever arm (10) in the extended position of the drawer (2).

3. The CD changer as claimed in one of the preceding claims, wherein the pin (11) is arranged in the radially outer region of the lever arm (10).

4. The CD changer as claimed in one of claims 1 to 2, wherein the pin (21) is arranged on an element (9) which is operatively connected to the lever arm (10).

5. The CD changer as claimed in one of the preceding claims, wherein the pin (21) has a surface (22) which is matched to that surface (23) of the stop (25) against which it bears in the extended state.

6. The CD changer as claimed in one of the preceding claims, wherein the stop (25) has a beveled edge region (24).

7. The CD changer as claimed in one of the preceding claims, wherein the guide groove (12) has at least one bevel (18) which serves as a stop.

8. The CD changer as claimed in one of the preceding claims, wherein the stop (15) and pin (11) are shaped in such a manner that, in the extended position of the drawer (2), a force acting in the direction of displacement of the drawer (2) first of all causes a small displacement of the drawer (2) before the stop (15) and pin (11) pass into a blockade position.
